Europäisches Patentamt

European Patent Office

Office européen des brevets

(19)

(11) Numéro de publication: **0 211 697**
**A1**

## (12) DEMANDE DE BREVET EUROPEEN

(21) Numéro de dépôt: **86400181.3**

(22) Date de dépôt: **29.01.86**

(51) Int. Cl.⁴: **F16D 23/14**

(30) Priorité: **15.07.85 FR 8510854**

(43) Date de publication de la demande:
**25.02.87 Bulletin 87/09**

(84) Etats contractants désignés:
**DE FR GB IT**

(71) Demandeur: **VALEO**
**64 Avenue de la Grande Armée**
**F-75017 Paris(FR)**

(72) Inventeur: **Lassiaz, Philippe**
**19, rue Thiers**
**F-92100 Boulogne(FR)**
Inventeur: **Gay, Christian**
**36, rue Labat**
**F-75018 Paris(FR)**

(74) Mandataire: **CABINET BONNET-THIRION**
**95 Boulevard Beaumarchais**
**F-75003 Paris(FR)**

(54) **Butée de débrayage à autocentrage maintenu, avec une rondelle de serrage à élasticité radiale.**

(57) Dans cette butée de débrayage à autocentrage maintenu l'assemblage des organes de manoeuvre 10 et d'attaque 11 est assuré au moyen d'un anneau 20 à élasticité radiale coopérant avec un flanc d'appui 28 ménagé sur le manchon 12 avec un profil tronconique de demi-angle au sommet A.

Le montage s'opère par un simple mouvement axial de l'organe d'attaque avec franchissement par l'anneau d'une lèvre saillante 29 disposée au bout d'une rampe d'engagement 30.

L'effort de serrage axial correspond à la composante axiale de la réaction élastique radiale de l'anneau sur la face tronconique 28.

EP 0 211 697 A1

FIG.1

## "Butée de débrayage à autocentrage maintenu, avec une rondelle de serrage à élasticité radiale."

L'invention se rapporte à une butée de débrayage, destinée à débrayer un mécanisme d'embrayage, cette butée comprenant un organe de manoeuvre comportant un manchon déplaçable axialement sous l'action d'un moyen de commande de débrayage, un organe d'attaque comprenant un roulement comportant une bague non tournante et une bague tournante entre lesquelles sont disposés des éléments roulants, un jeu radial étant ménagé entre la bague non tournante et l'organe de manoeuvre, un nez d'attaque, porté solidairement par la bague tournante du roulement, la bague non tournante du roulement et le manchon présentant respectivement des couronnes de portée ou rebords perpendiculaires à l'axe, ces couronnes ou rebords étant sollicités en appui l'un vers l'autre par une rondelle élastique portant sur des moyens d'appui de l'organe de manoeuvre d'un côté, et poussant la bague non tournante de l'autre de manière à assurer un serrage axial afin d'une part d'assembler le roulement et l'organe de manoeuvre et d'autre part permettre un autocentrage maintenu de la butée de débrayage par rapport à l'organe de manoeuvre.

Dans leur conception générale de telles butées, dites autocentreuses à autocentrage maintenu en raison des possibilités de jeu radial entre le roulement qui adopte l'axe de rotation du mécanisme d'embrayage et l'organe de manoeuvre maintenu sur son axe propre, sont connues de longue date par exemple par le document de brevet FR-A 1.467.843 rendu public le 3 Février 1967. Les perfectionnements qui y sont apportés visent la simplification et l'allègement de la structure et du montage, et la réduction de l'encombrement avec pour corollaire le dégagement des parties fonctionnement actives, c'est-à-dire le nez d'attaque du mécanisme d'embrayage et la face du rebord de l'organe de manoeuvre sur laquelle porte le moyen de commande de débrayage.

Comme l'autocentrage maintenu implique, outre bien entendu un jeu radial omnidirectionnel entre le roulement et l'organe de manoeuvre, persistant après le montage de la butée, un serrage avec une force réglée du rebord de la bague non tournante du roulement contre le rebord de l'organe de manoeuvre, on a mis en place des moyens élastiques de serrage susceptibles de prendre appui sur l'organe de manoeuvre d'une part, et sur un rebord de la bague non tournante d'autre part.

Couramment ces moyens élastiques de serrage sont constitués d'une rondelle élastique préformée en extension axiale, à forme tronconique ou ondulée, en appui sur un des organes, rebord ou manchon, et munie de pattes d'accrochage susceptibles de venir s'enclipser sur l'autre organe, par une déformation élastique provoquée à l'encontre de la déformation originaire.

Cette rondelle élastique vient se placer entre le roulement et le rebord de l'organe de manoeuvre, dans une région où la place est limitée en raison de la recherche de compacité, et très peu accessible à des outils de poussée capables de provoquer la déformation élastique à l'encontre de la déformation originaire.

Les documents de brevet FR-A-2.465.119 et 2.465.120 décrivent des rondelles à forme conique qui sont placées du côté du rebord de l'organe de manoeuvre opposé à celui où s'appuie le rebord de bague non tournante, ce rebord formant plaque d'appui étant susceptible de coulisser axialement sur le manchon, tandis que ce dernier porte une saillie annulaire contre laquelle porte le rebord de bague non tournante. Cette disposition résout les problèmes d'encombrement entre roulement et rebord d'organe de manoeuvre, au prix d'un allongement du manchon, et d'un risque d'interférence avec le moyen de commande de débrayage.

Dans le document de brevet FR-A-2.544.429 est décrite une disposition selon laquelle une rondelle élastique d'accrochage du type dit à retournement, à configuration bistable, agit entre le manchon et le rebord de la bague non tournante. A la mise en place du roulement sur le manchon, la rondelle est déformée jusqu'au delà de sa configuration de retournement.

Dans le document de brevet FR-A-2.547.002, est décrite une rondelle élastique d'accrochage à configuration conique, munie de pattes d'accrochage constituant une douille pour l'enfilage sur le manchon, un outil tubulaire inséré dans le jeu entre roulement et manchon poussant en bout les pattes jusqu'à ce qu'elles viennent s'encliqueter derrière un jonc ménagé sur le manchon.

Dans la demande de brevet français 84 02 584, déposée le 21 Février 1984, est décrite une rondelle élastique avec des pattes formant en coopération avec une saillie annulaire interrompue sur le manchon, un accrochage du genre dit à baïonnette, avec des rampes d'entrée telles que la précontrainte d'élasticité axiale est obtenue par la rotation de la rondelle précédant l'accrochage à baïonnette.

L'élasticité axiale de la rondelle résulte de la déformation originaire en extension axiale, soit en forme tronconique, soit en forme ondulée.

Toutes les dispositions antérieures ont pour inconvénient inhérent que l'encombrement axial de la rondelle élastique est déterminé par l'extension axiale d'élasticité au moins en position précontrainte. Sauf lorsque, par des dispositions qui compliquent la structure de butée, la rondelle élastique est reportée de l'autre côté du rebord d'appui du moyen de commande de débrayage - (FR-A-2.465.119 ; FR-A-2.465.120) l'encombrement axial de la rondelle se situe entre l'extrémité de la bague tournante et le rebord de la bague non tournante du roulement, dont la longueur se trouve ainsi augmentée. Par ailleurs le montage du roulement sur l'organe de manoeuvre exige l'intervention d'un outil qui accède à la rondelle soit par le jeu entre roulement et organe de manoeuvre, soit à travers des orifices ménagés dans le rebord de l'organe de manoeuvre. Enfin accessoirement la mise en forme des rondelles élastiques, et le réglage de leur élasticité nécessitent des outillages de mise en forme complexes et des traitements thermiques bien contrôlés.

L'invention a pour objectif une butée de débrayage du genre qui vient d'être décrit, où la rondelle élastique utilise un encombrement axial sensiblement limité à son épaisseur, et dont l'assemblage est très simplifié.

A cet effet l'invention propose une butée de débrayage, destinée à débrayer un mécanisme d'embrayage, cette butée comprenant un organe de manoeuvre comportant un manchon déplaçable axialement sous l'action d'un moyen de commande de débrayage, un organe d'attaque comprenant un roulement comportant une bague non tournante et une bague tournante entre lesquelles sont disposés des éléments roulants, un nez d'attaque porté solidairement par la bague tournante du roulement, la bague non tournante et le manchon présentant respectivement des couronnes de portée perpendiculaires à l'axe, ces couronnes étant sollicitées en appui l'une vers l'autre par une rondelle élastique portant sur des moyens d'appui de l'organe de manoeuvre d'un côté, et poussant la bague non tournante de l'autre de manière à assurer un serrage axial afin, d'une part, d'assembler le roulement et l'organe de manoeuvre et, d'autre part, de permettre un autocentrage maintenu de la butée de débrayage par rapport au manchon, caractérisée en ce que lesdits moyens d'appui de l'organe de manoeuvre contre lesquels porte la rondelle élastique comportent une gorge annulaire ménagée dans l'organe de manoeuvre avec un fond entre deux flancs dont le plus éloigné de la couronne de portée dudit organe de manoeuvre, dit flanc d'appui, s'étend depuis le fond jusqu'à une lèvre tandis que la rondelle élastique est un organe à élasticité radiale avec un profil adapté à coopérer avec celui de la gorge, l'un au moins dudit flanc d'appui et de la rondelle présentant une face tronconique, ladite rondelle ayant une capacité de déformation radiale suffisante pour franchir la lèvre de la gorge de telle sorte que le rappel élastique radial de la rondelle coopérant avec ledit flanc d'appui provoque le serrage axial de la couronne de portée de bague non tournante et de la couronne de portée du manchon sans que la rondelle porte sur le fond de la gorge.

On conçoit sans peine que, la mise en place de la rondelle, et son action de poussée axiale résultant uniquement de déformations radiales, l'encombrement axial de la rondelle est à peine supérieur à son épaisseur axiale propre. En outre, la déformation radiale nécessaire pour franchir la lèvre de gorge ne s'accompagnant pas de déformation axiale, la rondelle peut être poussée, pour l'assemblage, par la tranche terminale de la bague tournante, le retour élastique radial de la rondelle dès que la lèvre est franchie provoquant, à la fois le serrage axial du rebord de bague non tournante contre le rebord de l'organe de manoeuvre, et la prise de jeu juste indispensable entre la tranche terminale de bague tournante du roulement et la rondelle élastique.

Il est sans doute surprenant que la solution proposée par la Demanderesse au problème que pose l'assemblage des butées autocentreuses, problème aussi ancien que les butées autocentreuses elles-mêmes, n'ait pas vu le jour plus tôt. On peut se demander toutefois si les constructeurs de butées autocentreuses n'ont pas envisagé la question sous le seul angle de la poussée élastique axiale résultant d'une déformation élastique dans le sens de la poussée recherchée.

De préférence, l'organe de manoeuvre comporte une rampe tronconique à angle au sommet aigu qui s'achève à la lèvre de la gorge. Cette rampe, relativement douce, facilite la déformation radiale de la rondelle élastique pour le franchissement de la lèvre.

Dans une version de l'invention, la gorge est pratiquée dans le manchon.

En variante, l'organe de manoeuvre comporte à la périphérie extérieur de son rebord un retour coaxial au manchon, et la gorge est pratiquée dans ce retour.

En disposition préférée la rondelle est en forme de bague fendue et présente une largeur radiale supérieure à son épaisseur axiale, en sorte de posséder un rappel élastique radial relativement élevé avec un encombrement axial réduit.

De préférence, le flanc tronconique de la gorge présente un angle au sommet supérieur à 90°C. Ceci permet de disposer d'une poussée axiale supérieure au rappel radial.

Par ailleurs, la bague élastique peut porter sur une tranche de la bague non tournante opposée axialement à la couronne de portée. Dans une disposition particulière de l'invention, la butée comporte une plaque de manoeuvre sur laquelle porte le moyen de commande de débrayage, et cette portée de manoeuvre est pincée entre les couronnes de portée de la bague non tournante et de l'organe de manoeuvre.

Les caractéristiques et avantages de l'invention ressortiront d'ailleurs de la description qui va suivre à titre d'exemple, en référence aux dessins annexés dans lesquels:

la figure 1 est une vue en coupe radiale d'une butée de débrayage selon l'invention en cours de montage ;

les figures 2 et 3 sont des vues semblables montrant deux étapes suivantes du montage ;

la figure 4 est une vue encore semblable montrant la butée en position montée ;

la figure 5 est une vue en perspective de la rondelle élastique mise en oeuvre dans la butée des figures 1 à 4 ;

la figure 6 est une vue en coupe radiale d'une autre forme de réalisation de butée ;

la figure 7 est une vue en perspective de la rondelle élastique de la butée de la figure 6 ;

les figures 8 et 9 représentent des variantes de l'invention ;

la figure 10 représente encore une variante de l'invention ;

la figure 11 représente un aménagement de la butée représentée à la figure 10 ;

la figure 12 représente une autre variante de l'invention ;

les figures 13A et 13B représentent encore une autre variante de l'invention ;

les figures 14A et 14B représentent une variante simplifiée de l'invention ;

la figure 15 représente une variante de l'invention pour butée tirée ;

la figure 16 représente une variante de l'invention analogue à celle de la figure 11 ;

la figure 17 représente une variante de l'invention analogue à celle de la figure 11, mais pour butée tirée.

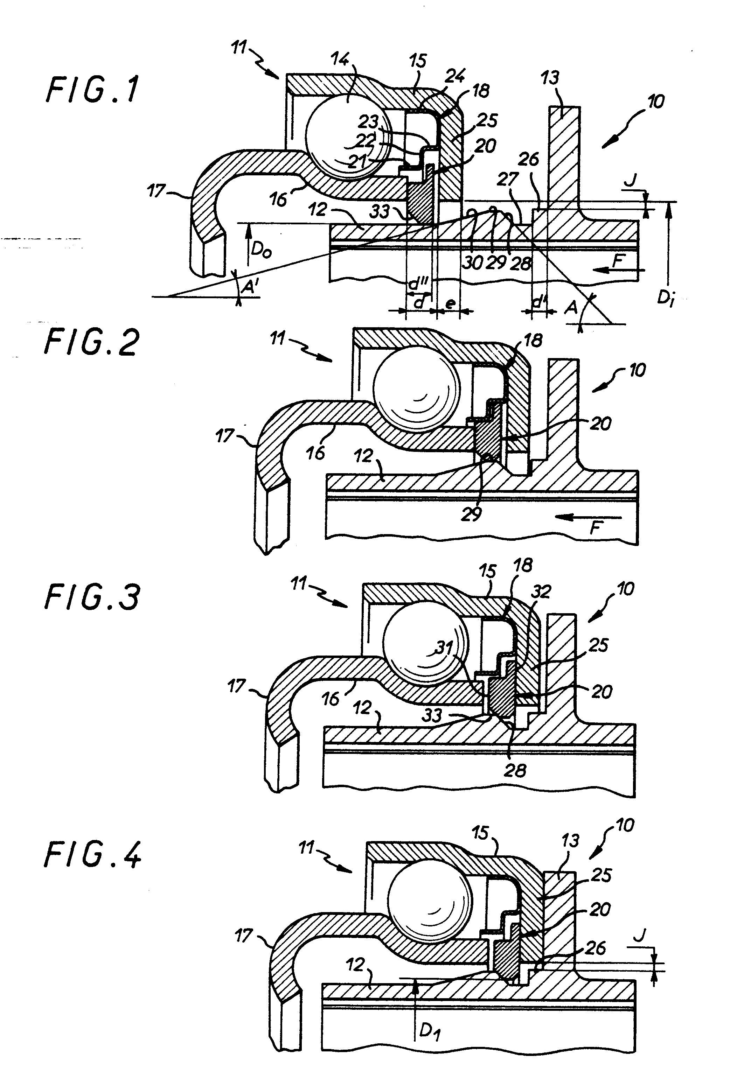

Suivant la forme de réalisation choisie et représentée aux figures 1 à 5, une butée de débrayage destinée à débrayer un mécanisme d'embrayage (non représenté) de véhicule automobile se compose essentiellement d'un organe de manoeuvre 10, d'un organe d'attaque 11 et d'un moyen d'assemblage de ces deux organes constitués ici par une rondelle élastique 20.

L'organe de manoeuvre 10 comporte un manchon 12 déplaçable en sens axial (flèche F) par coulissement sur un quelconque organe de guidage tel qu'une trompette d'embrayage sous l'action d'un moyen de commande de débrayage, le plus souvent une fourchette (non représentée) adaptée à agir sur un flasque ou rebord radial 13 ménagé à cet effet sur ledit manchon.

L'organe d'attaque 11 comporte de son côté, de manière également usuelle, un roulement par exemple à billes 14 avec une bague extérieure non tournante 15 et une bague intérieure tournante 16.

Ces deux bagues sont de manière connue en soi constituées ici l'une et l'autre en tôle emboutie, la bague ici intérieure 16 présentant un nez 17 d'attaque adapté à agir sur le dispositif débrayeur d'un embrayage non représenté tel que, les extrémités des doigts d'un diaphragme d'embrayage. Le roulement comporte de manière usuelle pour le maintien convenable de ses billes une cage de roulement (non détaillée) et, pour la retenue de la graisse de lubrification, celle-ci est confinée à l'arrière par un déflecteur 18 et à l'avant par un joint d'étanchéité (non représenté). Le déflecteur postérieur 18 comporte une partie centrale cylindrique 21 adaptée à s'étendre avec un faible jeu autour de la partie terminale de la bague interne 16, une zone annulaire de raccordement 22 perpendiculaire à l'axe, une seconde partie cylindrique 23 de plus grand diamètre que la partie centrale 21, et une partie périphérique 24 adaptée à s'emboîter dans le fond de la bague extérieure 15 du roulement. Ce fond est délimité par un rebord 25 perpendiculaire à l'axe et s'étendant vers cet axe jusqu'à un certain diamètre intérieur $D_i$ sensiblement égal au diamètre intérieur de la bague intérieure 16.

Cette bague intérieure s'étend par ailleurs en sens axial jusqu'à une certaine distance $\underline{d}$ du rebord radial 25 de la bague extérieure.

L'organe de manoeuvre 10, qui peut avantageusement être constitué par une pièce moulée, présente de son côté, à la suite de son flasque ou rebord radial 13, un épaulement 26 s'étendant en sens axial sur une distance $\underline{d'}$ inférieure à l'épaisseur $\underline{e}$ de la tôle constituant la bague 15 et établi à un diamètre inférieur au diamètre $D_i$ d'un certain jeu J prédéterminé pour l'autocentrage. Cet épaulement 26 est suivi d'une gorge délimitée par un fond 27 et un flanc tronconique 28 formant moyen d'appui qui détermine avec la direction axiale un certain demi angle au sommet A.

En fait, le flanc tronconique 28 s'écarte du flasque radial 13 en même temps qu'il s'éloigne du fond 27 dont il est issu. Autrement dit la dimension axiale de la gorge augmente de son fond 27 à son débouché au niveau de la lèvre 29.

Ce flanc est délimité par une lèvre 29 d'orientation axiale de diamètre sensiblement égal à celui de l'épaulement 26, constituant la zone d'aboutissement d'une rampe d'engagement 30 de forme tronconique établi avec un demi angle au sommet A' nettement inférieure à l'angle A. Au bout de cette rampe se trouve une partie cylindrique courante du manchon avec un certain diamètre $D_0$ sensiblement égal à celui du fond de gorge 27.

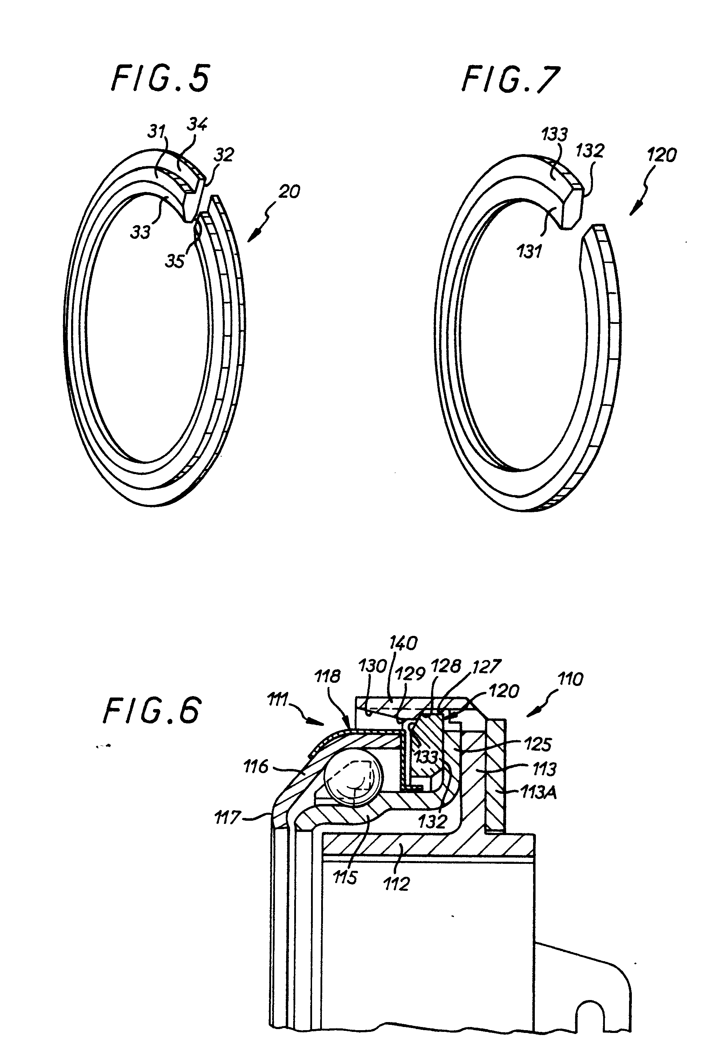

Enfin, le moyen d'assemblage, constitué selon l'invention par la rondelle élastique 20, présente au repos, comme illustré à la figure 5, la forme d'un tore interrompu par une fente s'étendant sur une faible portion de la circonférence. Le diamètre au repos de cette rondelle est sensiblement égal au diamètre $D_0$ de la partie courante du manchon. En section radiale elle présente un profil délimité par deux flancs droits 31, 32 se plaçant dans deux plans perpendiculaires à l'axe et séparés entre eux d'une distance $\underline{d}''$ légèrement inférieure à la distance axiale $\underline{d}$ entre bagues intérieure et extérieure du roulement, et plus précisément entre le rebord 25 de la bague 15 et la tranche terminale voisine de la bague tournante 16. Sur l'une de ses faces comprenant le profil 31 (qui est située à gauche sur les dessins) ce profil présente du côté radialement intérieur une face tronconique 33 et du côté radialement extérieur une feuillure 34. Sur son autre face il est simplement prévu du côté radialement intérieur un léger chanfrein 35.

On va décrire maintenant le montage et le fonctionnement de la butée de débrayage ainsi constituée.

La rondelle 20 est mise en place au montage du roulement constituant l'organe d'attaque 11 dans la position illustrée à la figure 1 : on voit qu'elle trouve sa place avec un certain jeu radial dans la gorge annulaire délimitée par le rebord radial 25 de la bague non tournante 15, la face terminale de la bague tournante 16 et par le déflecteur 18. En sens axial le jeu correspond à l'écart $\underline{d}$-$\underline{d}''$. L'organe d'attaque ainsi équipé s'engage sans difficulté sur la partie terminale du manchon puisque le diamètre $D_0$ de cette partie est, on l'a vu, sensiblement égal au diamètre au repos de la rondelle 20 ; le chanfrein 35 facilite cet engagement. La progression se poursuit sans effort jusqu'au début de la rampe 30.

La progression le long de cette rampe va impliquer la mise en oeuvre d'une poussée axiale d'intensité croissante, puisque la rondelle se trouve forcée à s'ouvrir progressivement jusqu'à un maximum correspondant à la position de la figure 2 où la rondelle 20 est amenée à chevaucher la lèvre 29. Il y a lieu de noter que dans cette position le jeu radial est pratiquement absorbé autour de la rondelle ; au jeu axial près la section transversale de la rondelle occupe ici la quasi totalité de la place disponible à l'intérieur du déflecteur 18. La poussée axiale était et demeure pour l'instant exercée sur la rondelle 20 par la face terminale de la bague tournante 16.

Dès que se trouve franchie cependant la lèvre 29, comme le montre la figure 3, la rondelle 20 s'engage par sa face tronconique 33 sur le flanc tronconique 28 du manchon ce qui a pour effet de libérer l'énergie élastique accumulée par l'expansion de la rondelle le long de la rampe 30. La rondelle tendant à reprendre sa configuration de repos (au diamètre $D_0$) entame une descente de la face tronconique 33 le long du flanc tronconique 28 : en sens axial le flanc droit 31 de la rondelle se sépare de la bague tournante 16, tandis que son flanc droit opposé 32 va prendre appui contre le rebord radial 25 de la bague non tournante 15. Ce changement d'appui s'opère de façon quasi-instantanée à la faveur du jeu ménagé en sens axial, le mouvement s'achevant à la position finale de la figure 4 où la rondelle 20 se trouve resserrée à un certain diamètre interne D1 et où avec effet de coincement entre les faces tronconiques coopérantes 33 et 28 le rebord radial 25 de la bague non tournante est plaqué contre le flasque 13 du manchon.

On remarquera que la rondelle 20, prenant appui sur le flanc 28 en raison de son élasticité radiale, exerce en direction du flasque 13 une poussée axiale, qui est ici dirigée vers le sommet du cône définissant ce flanc tronconique. Il en résulte que le sommet du cône est dirigé dans le sens de la poussée axiale.

Il importe de noter que le diamètre interne D1 qu'atteint dans cette position finale la rondelle 20 demeure supérieur à son diamètre de repos $D_0$ d'une quantité déterminée selon l'invention de telle sorte que, compte tenu des caractéristiques élastiques du matériau constitutif de la rondelle, du moment d'inertie de celle-ci, la composante axiale de la poussée exercée par l'intermédiaire du flanc tronconique 28 du manchon assure la force requise de serrage du rebord radial 25 contre le flasque 13 dudit manchon afin de permettre le cheminement d'autocentrage que le roulement doit pouvoir effectuer dans les limites du débattement déterminé par le jeu radial J, tout en assurant le maintien de cet autocentrage.

En raison de leurs fonctions, le rebord radial 25 de la bague non tournante 15 et le flasque 13 du manchon 12 seront dits également couronnes de portée.

Les figures 6 et 7 illustrent l'application de l'invention à une butée de débrayage dans laquelle le nez d'attaque est porté par la bague de roulement extérieure. On a repris ici les numéros de références déjà utilisés dans le cas précédent majorés de 100. Le déflecteur 118 présente ici un profil droit déterminant en regard du rebord radial 125 dirigé vers l'extérieur de la bague non tournante 115 un logement annulaire de forme générale rectangulaire pour la rondelle élastique 120 dont la forme de section est simplifiée en conséquence avec une face tronconique 133 située ici du côté radialement extérieur. Cette rondelle va coopérer en effet dans le cas présent avec un moyen d'appui ménagé radialement vers l'intérieur de l'organe de manoeuvre sur un retour coaxial 140 qui est relié par une série de pattes d'attache à la périphérie externe du rebord radial 113 du manchon 112, rebord qui est montré doublé ici d'une plaque d'usure 113A. Le moyen d'appui comporte ici encore un flanc tronconique 128 adapté à coopérer avec la face tronconique 133 de la rondelle 120, une lèvre 129 et une rampe d'engagement 130. Comme dans les figures précédentes, le flanc tronconique 128 s'écarte du flasque 113 en même temps qu'il s'éloigne du fond 127 dont il est issu.

On aura compris que dans le cas présent la déformation élastique subie par la rondelle 120 est un rétrécissement de son diamètre extérieur jusqu'à la valeur minimale déterminée par la lèvre 129 et que le serrage recherché s'opère par coincement de détente de la face tronconique 133 le long du flanc tronconique correspondant 128 du moyen d'appui.

On remarquera que, dans cette disposition, la rondelle 120, prenant appui sur le flanc 128 en raison de son élasticité radiale, exerce en direction du flasque 113 une poussée axiale, qui est ici dirigée à l'opposé du sommet du cône définissant ce flanc tronconique. On soulignera par ailleurs que la périphérie externe de la rondelle 120 est en position finale à distance du fond de la gorge pour que la poussée axiale soit maintenue.

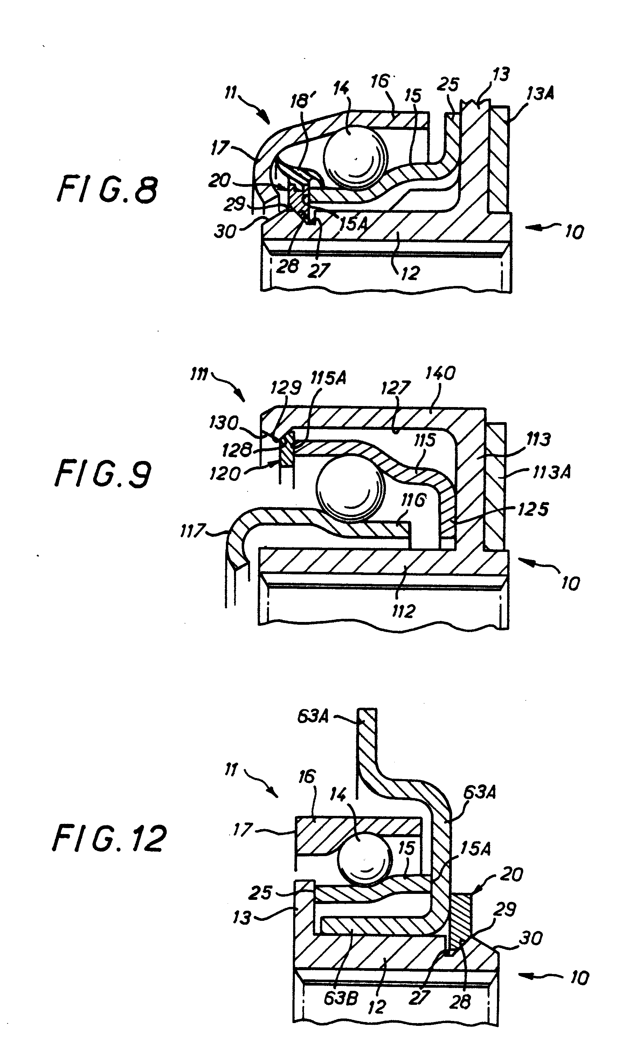

La butée représentée à la figure 8 diffère des butées décrites précédemment en ce que la gorge définie par son fond 27, son flanc d'appui 28, sa lèvre 29 et la rampe d'engagement 30 est pratiquée dans le manchon 12 vers l'extrémité de ce manchon axialement opposée au rebord 13. La rondelle à élasticité radiale 20 vient ainsi prendre appui sur une tranche d'extrémité 15A de la bague non tournante 15, opposée axialement au rebord 25 dirigé vers l'extérieur de cette bague. La rondelle 20 est logée entre la tranche d'extrémité 15A de la bague non tournante 15, et le nez d'attaque 17 de la bague tournante 16. A sa périphérie extérieure la rondelle 20 porte, engagé dans une rainure périphérique, un joint 18' en élastomère, avec des lèvres souples qui viennent au contact respectivement de la face interne du nez d'attaque 17 et de la face en regard de la bague non tournante 15. On notera dans cette disposition la bague tournante 16 est extérieure et la gorge pratiquée dans le manchon 12. Le rebord 13 du manchon 12 est doublé d'une plaque de manoeuvre 13A formant plaque d'usure. Le moyen de commande de débrayage vient prendre appui sur la plaque de manoeuvre 13A.

On rappelle la règle énoncée à l'occasion des figures 1 à 5. La rondelle 20 étant en serrage élastique, le sommet du cône définissant la rampe tronconique est dirigé dans le sens de la poussée axiale.

La figure 9 représente une butée, où le rebord 113 du manchon 112 se prolonge par un retour coaxial 140 en analogie avec la disposition de la figure 6.

Mais, comme dans la représentation de la figure 8 la rondelle 120, engagée dans une gorge pratiquée dans le retour 140, avec un fond 127, un flanc d'appui tronconique 128, une lèvre 129 et une rampe d'engagement 130, vient prendre appui sur une tranche 115A de la bague non tournante 115, à l'opposé du rebord 125 qui forme couronne de portée de la bague non tournante, en s'étendant vers l'axe, en appui sur la couronne de butée du manchon 112 formée par le rebord 113. Dans cette disposition la bague tournante 16 est intérieure. Par ailleurs, le rebord 113 du manchon est doublé par une plaque de manoeuvre ou d'usure 113A.

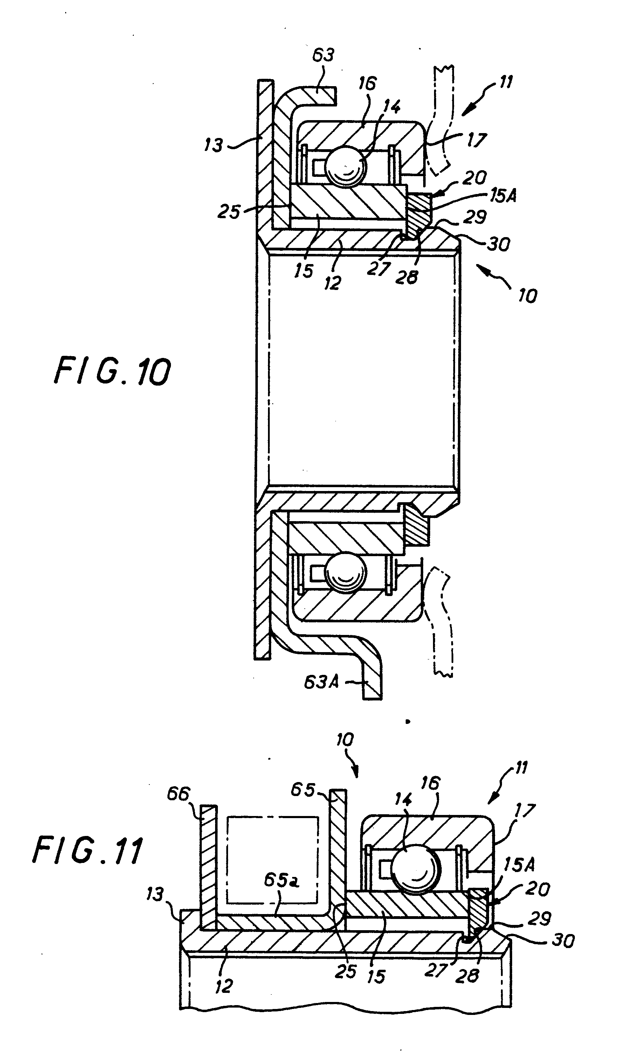

La butée représentée figure 10 présente des analogies de structure avec la butée représentée figure 8 notamment en ce que la rondelle élastique 20 porte sur une tranche 15A de la bague non tournante 15 à l'opposé de la couronne de portée 25, et en ce que la bague tournante 16 est extérieure. Mais cette butée est réalisée avec un encombrement axial très réduit.

Dans ce but le roulement 11 comporte des bagues usinées dans des anneaux. La bague tournante 16 comporte un nez d'attaque 17 suivant un plan radial, et la bague non tournante 15 est un anneau à section rectangulaire, de sorte que la couronne de portée 25 est une tranche droite. La butée comporte une plaque de manoeuvre ou d'usure 63, prise entre le rebord 13 du manchon 12 et la couronne de portée 25 de la bague non tournante 15. La plaque de manoeuvre 63 comporte des oreilles 63a, pour l'engagement avec le moyen de commande de débrayage.

La butée représentée figure 11 comporte la même structure que celle qui est représentée figure 10. Toutefois la plaque de manoeuvre 63 de la figure 10 est remplacée par une couronne 65,66 présentant une gorge à section rectangulaire ouverte radialement vers l'extérieur. Cette couronne est constituée d'une joue plate 66, en appui sur le bord 13 du manchon 12, et d'une joue 65 solidaire d'un fourreau tubulaire 65a qui vient s'appuyer sur la joue plate 66. Cette disposition de plaque de manoeuvre permet la commande positive du mouvement de la butée 10, en traction et en poussée, par le moyen de commande de débrayage (non référencé) qui s'engage dans la gorge.

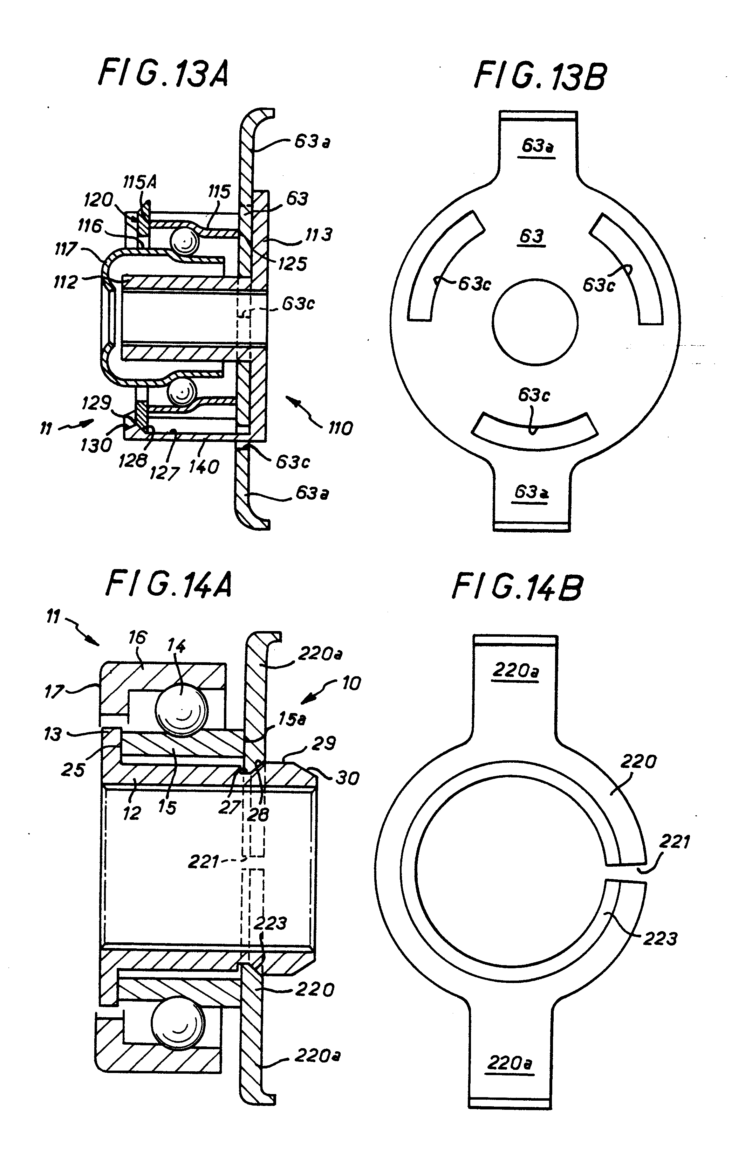

La butée représentée figure 12 présente encore une structure analogue à celles des figures 10 et 11, avec une bague tournante 16 extérieure. Mais ici la bague non tournante 15 porte contre le rebord 13 situé à l'avant du manchon 12 par une tranche d'extrémité 25 formant couronne de portée, et contre une plaque de manoeuvre 63 par sa tranche d'extrémité opposée 15A. La rondelle élastique 20 vient serrer axialement la bague non tournante 15 contre le rebord 13 par l'intermédiaire de la plaque de manoeuvre 63. Cette plaque de manoeuvre 63 présente un fourreau tubulaire 63b enfilé sur le manchon 12, et des oreilles 63a pour l'engagement du moyen de commande de débrayage. La gorge où s'engage la rondelle à élasticité radiale 20 comporte, comme précédemment, un fond 27, un flanc d'appui tronconique 28 éloigné du rebord 13 de manchon, une lèvre 29 et une rampe d'engagement 30 en tronc de cône à angle au sommet aigu.

Les figures 13A et 13B représentent une butée qui comporte des analogies avec la butée de la figure 9, avec une bague tournante 116 intérieure, et une gorge de logement de rondelle élastique 120 ménagée dans un retour 140 du rebord 113 du manchon 112. Mais cette butée comporte une plaque de manoeuvre 63 qui est serrée entre le rebord 113 du manchon 112, et la tranche terminale 125 formant couronne de portée pour la bague non tournante 115.

Aussi le retour 140 est divisé en trois segments de tube qui s'étendent angulairement sur 60° environ chacun, et espacés également de 60° environ. La plaque de manoeuvre 63 est en forme générale de disque, avec des oreilles 63a pour la poussée par le moyen de commande de débrayage. Comme on le voit mieux sur la figure 13B, la plaque de manoeuvre 63 comporte un évidement circulaire central pour le passage du manchon 112, et trois évidements 63c en forme de segments de couronne, s'étendant sur sensiblement 60° et espacés entre eux sensiblement de 60°, et prévus pour laisser passer les segments de tube du retour 140, y compris la lèvre 129 de la gorge de maintien de la rondelle élastique 120.

Les figures 14A et 14B représentent une butée simplifiée. Sa structure est analogue à la butée de la figure 12. Toutefois la rondelle à élasticité radiale 220 est agencée pour former plaque de manoeuvre. Elle présente la forme d'un anneau, avec une fente 221 destinée à procurer l'élasticité radiale nécessaire, et une face tronconique 223, qui vient prendre appui sur le flanc 28 de la gorge du manchon 12, pour porter au serrage sur la tranche 15A de la bague non tournante 15, en appui par son autre tranche d'extrémité 25 formant couronne de portée contre le rebord 13 du manchon 12. Comme on le voit mieux figure 14B la rondelle 220 comprend, à 90° de la fente 221, des oreilles 220a pour engagement avec le moyen de commande de débrayage.

On appréciera que la butée se compose de trois organes seulement, un roulement 11, un manchon 12 et une plaque de manoeuvre 220.

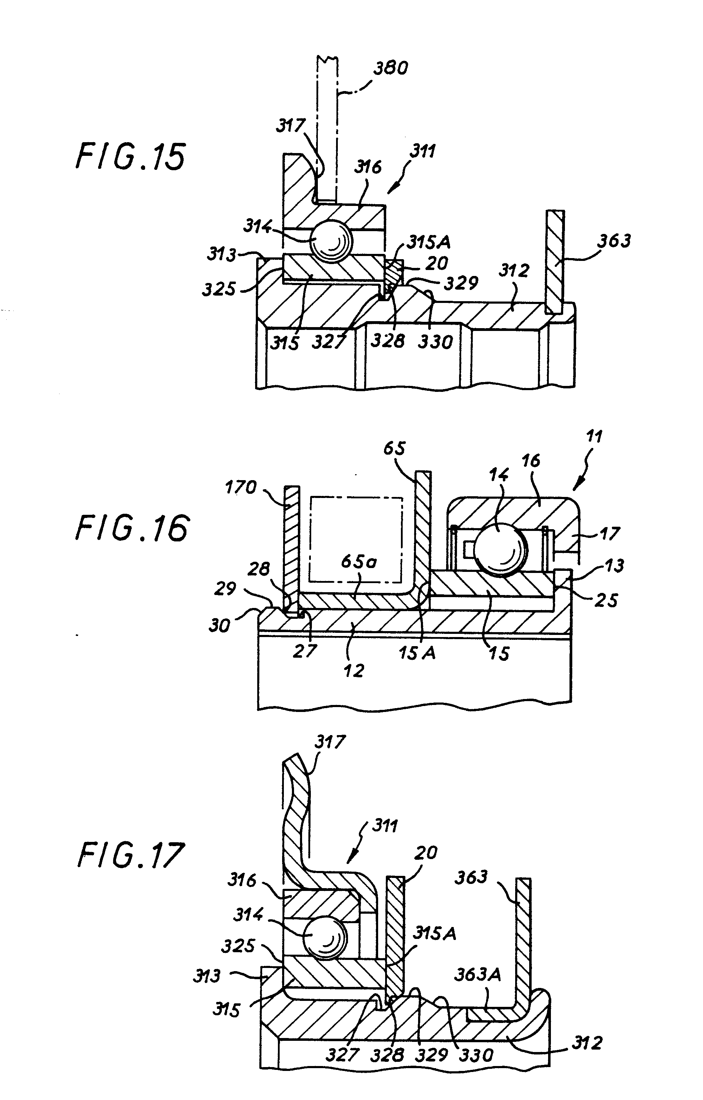

La figure 15 représente une butée du type dit "butée tirée", tandis que les butées précédemment décrites étaient du type dit "butée poussée". Les références visant les parties correspondant à un élément des butées selon la figure 1 seront majorées de 300 par rapport à celles de cette figure 1. Par butée tirée on entend une butée qui travaille en traction et dont le nez d'attaque 317 est du côté opposé à celui de la plaque de manoeuvre 363 par rapport au diaphragme le d'embrayage 380.

La butée comporte un manchon 312 et un roulement 311 comprenant une bague tournante 316 et, une bague non tournante 315 et entre les bagues des billes 314 (comme on l'a mentionné plus haut) la bague tournante 316 comporte un nez d'attaque 317 usiné dans la face postérieure d'un rebord. La bague non tournante 315, ici intérieure, porte par sa tranche antérieure 325 sur un rebord 313 formant couronnes de portée. La tranche 325 est maintenue en appui sur le rebord 313 par la poussée d'une rondelle 20 à élasticité radiale en serrage sur la tranche postérieure 315A de la bague non tournante 315. La rondelle 20 est semblable aux rondelles décrites avec les figures 10 à 12. Elle est logée dans une gorge du manchon 312 comportant un fond 327, un flanc tronconique 328 d'appui pour la rondelle 20, le sommet du cône définissant le flanc tronconique 328 étant dirigé dans le sens de la poussée axiale puisque la rondelle 20 est à élasticité radiale en serrage. Cette rondelle 20 est montée avec franchissement de la rampe tronconique d'engagement 330 et de la lèvre de gorge 329. A la partie postérieure du manchon 12 on a serti, après mise en place de la rondelle 20, une plaque de manoeuvre 363. Le moyen de commande de débrayage, normalement doigts d'une fourchette de débrayage, porte sur la face interne de la plaque de manoeuvre 363.

La butée représentée figure 16 est très proche de la butée représentée figure 11. Toutefois, la tranche antérieure 25 de la bague non tournante 15 porte sur un rebord 13 antérieur du manchon 12, en retrait du nez d'attaque 17 de la bague tournante 16. Sur la tranche postérieure 15A de la bague non tournante 15 vient porter une joue 65 solidaire d'un fourreau tubulaire 65a qui constitue avec une joue plate 170 une couronne de manoeuvre où s'engage un organe de commande de débrayage, tel que les doigts d'une fourchette de débrayage, pour une commande positive de la butée dans les deux sens.

Mais, à la différence de la disposition de la figure 11, la joue plate 170 forme rondelle à élasticité radiale. Elle se loge en appui de serrage dans une gorge, pratiquée dans le manchon 12 vers son extrémité postérieure, et qui comporte un fond 27, un flanc tronconique 28, une lèvre 29 et une rampe d'engagement 30.

On remarquera que dans cette disposition la rondelle 170 ne comporte pas, comme selon les autres figures, de face tronconique complémentaire du flanc d'appui 28, et l'alésage intérieur de cette rondelle 170 est cylindrique. Les arêtes entre l'alésage intérieur et les faces de la rondelle peuvent être simplement abattues pour éviter une incrustation dans le flanc d'appui 28.

La butée représentée figure 17, est une "butée tirée" analogue à celle de la figure 15, et comporte les mêmes références. Toutefois le nez 317, au lieu d'être usiné dans la bague tournante 16 du roulement, appartient à un boîtier embouti serti sur cette bague tournante. La différence la plus importante d'avec la butée selon la figure 15 est que, comme aux figures 11 et 16 l'organe de manoeuvre est une couronne, constituée d'une plaque de manoeuvre 316 et de la rondelle élastique 20. Le moyen de commande de débrayage agit donc en traction sur la plaque 316, et en poussée sur la rondelle 20. Le montage de la butée comporte la mise en place du roulement 311 sur le manchon 312, l'insertion de la rondelle 20 qui monte sur la rampe d'engagement 330, passe sur la lèvre cylindrique 329, pour descendre le long du flanc d'appui 328 et serrer la bague non tournante 315 sur le flasque 313.

Après cela la plaque de manoeuvre 363 est enfilée, avec la douille cylindrique 363A sur l'épaulement du manchon prévu à cet effet, et le manchon 312 est ensuite évasé à l'arrière de la plaque de manoeuvre 363, pour sertir celle-ci. L'alésage extérieur de la douille 363A vient à fleur du diamètre extérieur du manchon 312, en arrière de la rampe d'engagement 330.

L'invention n'est, bien entendu, pas limitée aux détails des formes de réalisation qui viennent d'être décrites à titre d'exemple. En particulier l'organe de serrage à élasticité radiale peut être en métal ou en matière plastique, et être constitué sous les formes les plus diverses ; on peut ainsi, au lieu de donner à une bague une capacité de déformation élastique convenable par une fente, constituer un anneau avec des éléments de périphérie amincis de forme appropriée entre au moins deux joues réparties symétriquement autour de l'axe où l'appui sur le flanc d'appui 28 ou 128 est conservé. On peut également utiliser, pour réaliser des rondelles à serrage, un matériau notamment une matière plastique, qui possède une capacité de déformation élastique suffisante en élongation pour que la rondelle puisse franchir la lèvre 29 sans être fendue.

Sous un autre aspect, on aura compris que l'appui des couronnes de portée de la bague non tournante (15, 115) peut être direct ou indirect, - (comme aux figures 10, 11 et 13A), et que l'appui de la rondelle élastique (20, 120) sur cette bague non tournante peut être direct, ou indirect (comme aux figures 12 et 16).

Le contact entre rondelle et flanc d'appui se fait suivant la face tronconique que possède l'un au moins de ces organes. Le choix de l'inclinaison de cette face, correspondant au demi angle au sommet du cône qui définit la face tronconique, détermine le rapport de la poussée axiale au rappel élastique radial de la rondelle.

Il est clair que, si l'on néglige le frottement, ce rapport est égal à la tangente du demi angle au sommet du cône définissant le flanc d'appui. Lorsque l'angle au sommet est supérieur à 90°, la tangente du demi angle au sommet est supérieur à 1, et la poussée axiale est supérieure au rappel radial.

Le choix de l'angle au sommet permet de maîtriser les conditions d'un démontage éventuel par un mouvement inverse au mouvement de montage des organes de manoeuvre et d'attaque.

Dans tous les cas le serrage du dispositif en sens axial demeure assuré par l'énergie élastique résiduelle de la rondelle, qui bien entendu ne doit pas porter sur le fond de la gorge. Par ailleurs, l'encombrement axial de la rondelle élastique, compte tenu des jeux axiaux nécessaires au montage, est réduit par rapport à l'encombrement correspondant des rondelles à élasticité axiale.

## Revendications

1) Butée de débrayage, destinée à débrayer un mécanisme d'embrayage, cette butée comprenant un organe de manoeuvre (10, 110) comportant un manchon (12, 112) déplaçable axialement sous l'action d'un moyen de commande de débrayage, un organe d'attaque (11, 111) comprenant un roulement comportant une bague non tournante (15, 115) et une bague tournante (16, 116) entre lesquelles sont disposés des éléments roulants (14, 114), un jeu radial étant ménagé entre la bague non tournante et l'organe de manoeuvre un nez d'attaque (17, 117) porté solidairement par la bague tournante (16, 116) du roulement, la bague non tournante (15, 115) et le manchon (12, 112) présentant respectivement des couronnes de portée (25, 125 ; 13, 113) perpendiculaires à l'axe, ces couronnes étant sollicitées en appui l'une vers l'autre par une rondelle élastique (20, 120, 220) portant sur des moyens d'appui (29, 129) de l'organe de manoeuvre d'un côté, et poussant la bague non tournante (15, 115) de l'autre de manière à assurer un serrage axial afin, d'une part, d'assembler le roulement et l'organe de manoeuvre et, d'autre part, de permettre un autocentrage maintenu de la butée de débrayage par rapport au manchon (12, 112), caractérisée en ce que lesdits moyens d'appui de l'organe de manoeuvre contre lesquels porte la rondelle élastique (20, 120, 200) comportent une gorge annulaire ménagée dans l'organe de manoeuvre (11, 111) avec un fond (27, 127) entre deux flancs dont le plus éloigné (28, 128) de la couronne de portée (13, 113) dudit organe de manoeuvre, dit flanc d'appui, s'étend depuis le fond (27, 127) jusqu'à une lèvre (29, 129) tandis que la rondelle élastique (20, 120, 220) est un organe à élasticité radiale avec un profil adapté à coopérer avec celui de la gorge, l'un au moins dudit flanc d'appui (28, 128) et de la rondelle (20, 120, 220) présentant une face tronconique (28, 128 ; 33, 133), ladite rondelle (20, 120, 220) ayant une capacité de déformation radiale suffisante pour franchir la lèvre (29, 129) de la gorge de telle sorte que le rappel élastique radial de la rondelle (20, 120, 220) coopérant avec ledit flanc d'appui (28, 128) provoque le serrage axial de la couronne de portée (25, 125) de bague non tournante et de la couronne de portée (13, 113) du manchon (12, 112) sans que la rondelle (20, 120, 220) porte sur le fond (27, 127) de la gorge.

2) Butée selon la revendication 1, caractérisée en ce que l'organe de manoeuvre (10, 110) comporte une rampe tronconique (30, 130) d'engagement à angle au sommet aigu qui s'achève à la lèvre (29, 129) de gorge.

3) Butée selon l'une des revendications 1 et 2, caractérisée en ce que la rondelle élastique (20, 120) prend appui sur un rebord (25, 125) de la bague non tournante (15, 115) qui constitue couronne de portée.

4) Butée selon l'une des revendications 1 et 2, caractérisée en ce que la rondelle élastique (20, 120, 220) prend appui sur une tranche (15A, 115A) de la bague non tournante, axialement à l'opposé de la couronne de portée (25, 125).

5) Butée selon une quelconque des revendications 1 à 4, caractérisée en ce que ladite gorge est pratiquée dans le manchon (12).

6) Butée selon une quelconque des revendications 1 à 4, caractérisée en ce que l'organe de manoeuvre (111) comporte à la périphérie extérieure d'un rebord (113) constituant couronne de portée, un retour coaxial (140) coaxial au manchon (112), et ladite gorge est pratiquée dans ce retour (140).

7) Butée selon une quelconque des revendications 1 à 6, caractérisée en ce que ladite rondelle (20, 120, 220) est en forme de bague fendue et présente une largeur radiale supérieure à son épaisseur axiale.

8) Butée selon une quelconque des revendications 1 à 7, caractérisée en ce que la face tronconique (29, 129 ; 33, 133, 233) présente un angle au sommet au moins égal à 90°.

9) Butée selon une quelconque des revendications 1 à 8, comportant une plaque de manoeuvre (13A, 113A) tenue sur le manchon (12, 112) et sur laquelle vient agir le moyen de commande de débrayage, caractérisée en ce que la plaque de manoeuvre est serrée entre les couronnes de portée (25, 125 ; 13, 113) de la bague non tournante (15, 115) et de l'organe de manoeuvre (11, 111).

10) Butée selon la revendication 9, caractérisée en ce que ladite plaque de manoeuvre est constituée d'une couronne (65, 66) présentant une gorge à section rectangulaire s'ouvrant radialement vers l'extérieur, en sorte que le moyen de commande de débrayage, engagé dans la gorge, agisse sur la plaque de manoeuvre en poussée et traction.

11) Butée selon la revendication 10, caractérisée en ce que la couronne constituant plaque de manoeuvre est composée d'une joue plane (66), et d'une joue (65) solidaire d'un moyeu tubulaire (65a) accolées sous la poussée axiale de la bague non tournante (15) provoquée par la rondelle (20).

12) Butée selon la revendication 9 en dépendance de la revendication 5, caractérisée en ce que ledit retour (140) coaxial au manchon est divisé en segments occupant une étendue angulaire limitée, la plaque de manoeuvre (63) comportant des lumières (63c) en segments de couronne aptes à laisser passer les segments dudit retour 140.

13) Butée selon la revendication 4, caractérisée en ce que la rondelle élastique (220) constitue une plaque de manoeuvre sur laquelle agit le moyen de commande de débrayage.

0 211 697

FIG.1

FIG.2

FIG.3

FIG.4

# FIG.5

*31* *34* *32* *20* *33* *35*

# FIG.7

*133* *132* *120* *131*

# FIG.6

*111* *118* *130* *140* *129* *128* *127* *120* *110* *116* *133* *125* *113* *113A* *117* *132* *115* *112*

FIG.8

FIG.9

FIG.12

FIG.10

FIG.11

0 211 697

## FIG.13A

115A
120
116
117
112
63a
115
63
113
125
63c
129
11
130
128 127 140
110
63c
63a

## FIG.13B

63a
63
63c        63c
63c
63a

## FIG.14A

11
16  14
17
13
25
12  15   27 28
221
223
220a
10
15a
29
30
220
220a

## FIG.14B

220a
220
221
223
220a

FIG.15

380
317
316
311
314
315A
313
20
325
329
312
363
315 327 328 330

FIG.16

65
170
14 16
11
17
28
29
65a
13
30
25
27 15 A 15
12

FIG.17

317
311
316
20
314
363
325
315A
313
315
363A
312
327 328 329 330

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | EP-A-0 062 535 (SKF)<br><br>* Pages 3-5; page 11, lignes 14-25; figure 2 * | 1,5,7,8 | F 16 D 23/14 |
| | --- | | |
| A | GB-A- 385 039 (STANLEY)<br>* Page 2, lignes 73-78; figure 3 * | 1 | |
| | --- | | |
| A | GB-A-2 073 353 (VALEO)<br>* Page 3, lignes 118-121; figure 1 * | 9 | |
| | --- | | |
| A | EP-A-0 030 165 (S.N.R.)<br>* Page 5, lignes 18-22; figure 6 * | 13 | |
| | --- | | DOMAINES TECHNIQUES RECHERCHES (Int. Cl.4) |
| A | DE-A-3 151 473 (INA) | | F 16 D |
| | --- | | |
| A | EP-A-0 080 263 (AUTOMOTIVE) | | |
| | --- | | |
| A | FR-A-2 503 297 (VALEO) | | |
| | --- | | |
| A | US-A-4 482 041 (LADIN) | | |
| | ---      -/- | | |

Le présent rapport de recherche a été établi pour toutes les revendications

| Lieu de la recherche | Date d'achèvement de la recherche | Examinateur |
|---|---|---|
| LA HAYE | 23-10-1986 | ORTHLIEB CH.E. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82

## DOCUMENTS CONSIDERES COMME PERTINENTS

Page 2

| Catégorie | Citation du document avec indication, en cas de besoin. des parties pertinentes | Revendication concernée | CLASSEMENT DE LA DEMANDE (Int. Cl.4) |
|---|---|---|---|
| A | FR-A-2 125 871 (SCHAEFFLER) | | |
| | --- | | |
| A | FR-A-2 526 107 (NIPPON SEIKO) | | |
| | ----- | | |

DOMAINES TECHNIQUES RECHERCHES (Int. Cl.4)

Le présent rapport de recherche a été établi pour toutes les revendications

| Lieu de la recherche | Date d'achèvement de la recherche | Examinateur |
|---|---|---|
| LA HAYE | 23-10-1986 | ORTHLIEB CH.E. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82